# EUROPEAN PATENT APPLICATION

(11) **EP 2 843 365 A2**
(43) Date of publication of application: **04.03.2015**
(21) Application number: 14180888.1
(22) Date of filing: 13.08.2014
(51) Int. Cl.: G01C 21/20

(54) **Site surveying**

(30) Priority: 27.08.2013 US 201314011542
(71) Applicant: Honeywell International Inc., Morristown, NJ 07962-2245 (US)
(72) Inventor: KAMALAKANNAN, Arunkumar, Morristown, NJ New Jersey 07962-2245 (US); KAMBHAMPATI, Pavan, Morristown, NJ New Jersey 07962-2245 (US)
(74) Representative: Houghton, Mark Phillip

(57) **Abstract**

Systems, methods, and devices for site surveying are described herein. For example, one or more embodiments include receiving a map associated with a site, identifying a number of points on the map associated with the site with a computing device, determining a distance between the number of points based on data associated with a camera in communication with the computing device, and calibrating a length between the number of points on the map with the determined distance.

## Description

### Technical Field

The present disclosure relates to site surveying.

### Background

A map of a site can be used to perform a number of tasks. For example, the map of the site can be used for installing, commissioning, maintaining, and/or trouble shooting a network of nodes. In some examples, a node can include a sensor, a wireless router, a camera, etc. and the map of the site can be of a room of a building, area of a compound, floor of a building, area, etc. However, the map of the site may not be available in some circumstances. Alternatively, and/or in addition, the map of the site may not be calibrated with real world coordinates. As such, the lack of a map of the site and/or a calibrated map of the site may delay the number of tasks that are to be performed at the site.

### Brief Description of the Drawings

Figure 1A illustrates an example diagram for site surveying according to one or more embodiments of the present disclosure.
Figure 1B illustrates an example of a user interface for site surveying according to one or more embodiments of the present disclosure.
Figure 2 illustrates an example diagram for site surveying according to one or more embodiments of the present disclosure.
Figure 3 illustrates a method for site surveying according to one or more embodiments of the present disclosure.
Figure 4 illustrates a computing device for site surveying according to one or more embodiments of the present disclosure.

### Detailed Description

Systems, methods, and devices for site surveying are described herein. For example, one or more embodiments include receiving a map associated with a site, identifying a number of points on the map associated with the site with a computing device, determining a distance between the number of points based on data associated with a camera in communication with the computing device, and calibrating a length between the number of points on the map with the determined distance.

As discussed herein, nodes can be placed at various locations in a structure to distribute data and/or collect data. For example, a wireless router can be placed in the structure to distribute and/or collect data; a sensor (e.g., smoke detector) can be placed in the structure to collect data (e.g., data associated with a fire), and/or a camera can be placed in the structure to collect images for use in security monitoring. Placement of the nodes can be important for proper distribution and/or collection of data. In an example, an improper placement of a node can result in data not being distributed and/or collected for a portion of the structure.

In an example, proper placement of the node can depend on a map of a site where the node is to be installed. However, the map of the site may not be available because the map may have been lost and/or the map may have never been created. Alternatively, and/or in addition, a map may exist, but the map may not be calibrated with distances between particular points on the map.

In some prior solutions, the map of the site may be created by scanning a blue print of the site and turning the blue print into a digital file. However, the blue print may not contain measurements of the site and therefore, a user may have to physically measure the corresponding portions of the blue print and enter the measurements into the digital file. These prior solutions can be time consuming and labor intensive.

Alternatively, and/or in addition, errors can be made when making measurements of the site and specifying the portion of the map that corresponds to the measurements. In an example, a user can make an error when using an instrument (e.g., tape measure) to measure features included in the map of the site. For instance, the user can read the instrument incorrectly. Alternatively, and/or in addition the user can make an error when entering the measurements into the corresponding portions of the map. For instance, the user can enter a measurement for a portion of the map of the site and the rest of the map can be calibrated based on the entered measurement. The measurement for the portion of the map can be entered into a graphical user interface.

In an example, when entering the measurement into the graphical user interface, calibration can be based on a pixel to unit (e.g., meter) conversion. However, when entering the measurement for the portion of the map that will be used for calibrating the rest of the map into the graphical user interface, the user can make errors that are off by a few pixels. These errors can be magnified through the conversion, resulting in distances associated with the map of the site that are incorrect. For instance, distances associated with the map of the site can be off by several meters or more.

Some embodiments of the present disclosure can create a map of the site with a computing device. In an example, the computing device can receive a number of images that have been taken of the site and can assemble the images to create a computer animated drawing of the site. Alternatively, and/or in addition, based on the number of images that have been taken of the site, particular points in at least one of the number of images can be identified. Based on data associated with a camera that took the images, a distance between the particular points can be determined by the computing device and the map of the site can be calibrated using the distance between the particular points without the user manually entering a distance and introducing potential error. As such, time spent calibrating distances associated with the map of the site can be reduced and accuracy of the calibration can be increased.

Some embodiments of the present disclosure can receive a map associated with the site with the computing device and calibrate the map based on a first and second point identified on the map associated with the site. In an example, the user can place the camera at the first point and focus the camera on the second point. Based on data associated with the camera, the distance between the first and second point can be determined and used to calibrate distances associated with additional points on the map of the site.

In the following detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and/or structural changes may be made without departing from the scope of the present disclosure.

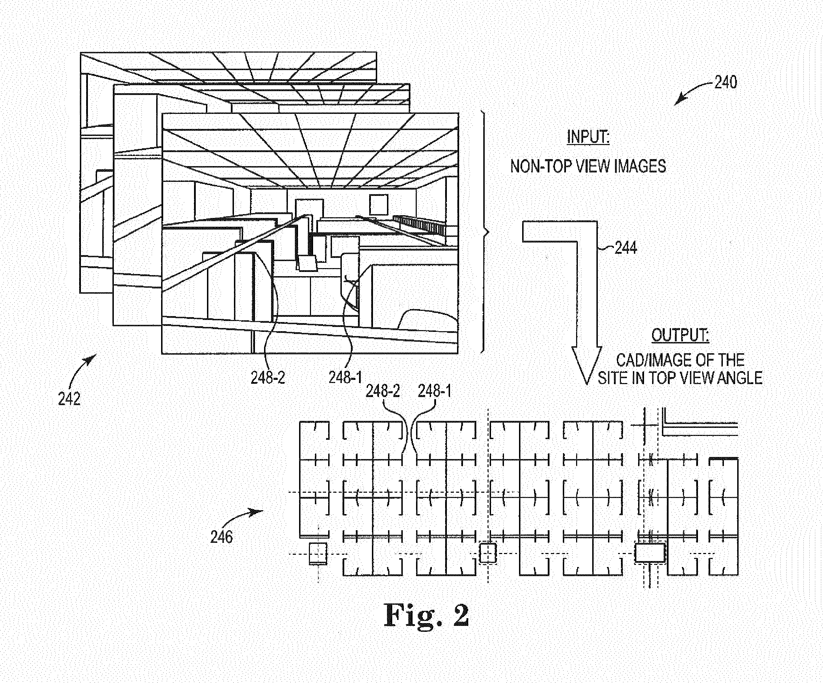

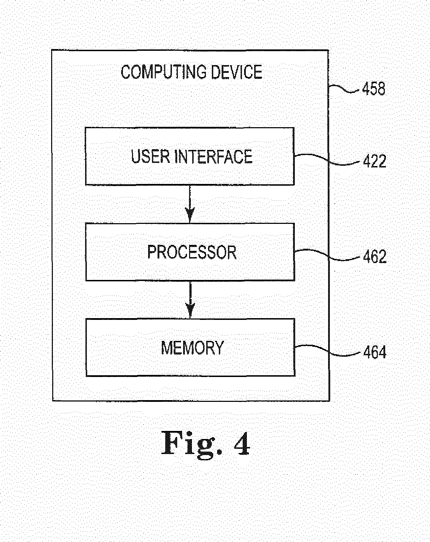

The figures herein follow a numbering convention in which the first digit or digits correspond to the drawing figure number and the remaining digits identify an element or component in the drawing. Similar elements or components between different figures may be identified by the use of similar digits. For example, 222 may reference element "22" in Figure 2, and a similar element may be referenced as 422 in Figure 4.

As will be appreciated, elements shown in the various embodiments herein can be added, exchanged, and/or eliminated so as to provide a number of additional embodiments of the present disclosure. As used herein, "a" or "a number of" refers to one or more. In addition, as will be appreciated, the proportion and the relative scale of the elements provided in the figures are intended to illustrate the embodiments of the present invention, and should not be taken in a limiting sense.

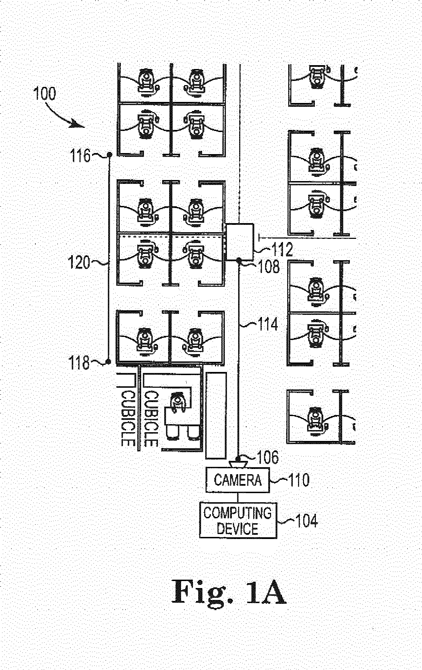

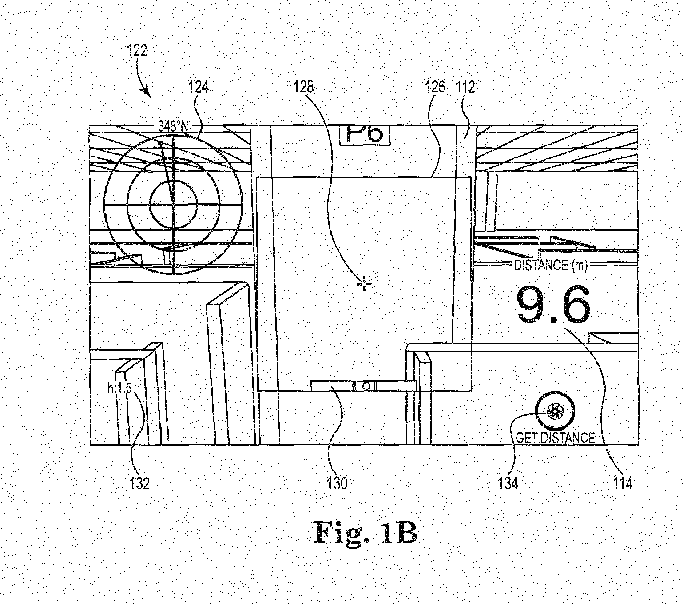

Figure 1 illustrates an example diagram for site surveying according to one or more embodiments of the present disclosure. Some embodiments can include a system for site surveying. In an example, the site can be a room of a building, area of a compound, floor of a building, area, etc. A map associated with the site 102 may be desired for performing a particular task in the site. For example, the map associated with the site can be used for installing, commissioning, maintaining, and/or trouble shooting a network of nodes. As such, it may be desirable to have a map that is calibrated with measurements. For instance, a map that includes distances between particular points on the map can be used for determining a position where a node should be installed and/or troubleshooting a network of nodes by verifying that nodes are placed a defined distance apart.

In an example, the map associated with the site 102 can be constructed based off of a scanned blue print and/or a digital file that was created when designing the site. However, the map associated with the site 102 may not include distances between particular points on the map, which can be important for reasons discussed herein. As such, some embodiments can calibrate the map associated with the site 102 with distances.

In some embodiments, the map associated with the site 102 can be received by a computing device 104. In an example, the map associated with the site 102 can be downloaded by the computing device 104 from a database that includes the map associated with the site 102. The map associated with the site 102 can be a digital rendering of the site such as a computer animated drawing of the site and/or a blue print of the site. In an example, a physical copy of the site can be scanned and turned into a digital rendering of the site. The map associated with the site 102 may not include dimensions of particular features of the site. For instance, the map associated with the site may include features such as boundaries associated with walls, columns, doorways, positions of cubicles, but may not include dimensions associated with those features.

In some embodiments, a first point 106 and second point 108 can be identified on the map associated with the site 102 with the computing device 104. In an example, the first point 106 and the second point 108 can be identified by a user of the computing device 104 manually. In an example, the user can choose what points (e.g., first point 106 and second point 108) to identify. For instance, the map associated with the site 102 can be displayed on a graphical user interface of the computing device 104 and the user can identify the first point 106 and the second point 108 via the graphical user interface. In some examples, the graphical user interface can be a touch screen and the user can touch the screen to identify the first point 106 and the second point 108 on the map associated with the site 102.

In some embodiments, the map associated with the site 102 can be enlarged on the graphical user interface of the computing device 104 to increase an accuracy in identifying the position of the first point 106 and the second point 108. For example, as the map associated with the site 102 is enlarged, features associated with the site can be enlarged giving a greater frame of reference for identifying the position of the first point 106 and the second point 108.

In some embodiments, a camera 110 in communication with the computing device 104 can be placed at the first point 106. In an example, the camera 110 can be a camera on a cell phone, personal digital assistant, tablet, laptop, etc. Alternatively, and/or in addition, the camera can be separate from the computing device 104, but in communication with the computing device 104 via a wired and/or wireless connection.

The lens of the camera 110 can be placed at the first point 106, in an example. For instance, where the camera 110 is a rear facing camera in a tablet, the back of the tablet can be placed at the first point 106 by a user of the tablet.

In some embodiments, the camera 110 can be focused on the second point 108. In an example, because the second point 108 is a particular distance away from the first point 106, the camera can make a particular adjustment in its focus in order to focus on the second point 108. As such, for each particular distance between the camera 110 and the object 112 (e.g., column, wall, etc.) that the camera focuses on, the camera 110 makes an adjustment in its focus in order to focus on the object. Accordingly, a model of camera focus versus distance can be created and be used to determine a distance between the camera 110 and the object that the camera is focusing on.

In some embodiments, a distance 114 between the first point 106 and the second point 108 can be determined based on data associated with the camera 110. In an example, the data associated with the camera 110 can include focal data associated with the camera 110. Focal data can include data associated with a particular focus that the camera 110 uses to focus on the second point 108 from the first point 106, in an example.

Alternatively, and/or in addition, the data associated with the camera 110 can include an angle of the camera 110. In an example, if the camera 110 is tipped up and/or down relative to a point of reference (e.g., first point 106) that is perpendicular to a surface of the object 112 associated with the second point 108, a determined distance 114 between the first point 106 and the second point 108 can be determined to be longer than it actually is.

For instance, tipping the camera 110 up and/or down relative to the point of reference that is perpendicular to the surface of the feature can increase a distance between the camera 110 (e.g., first point 106) and a point on the surface of the object 112 where the camera 110 is focusing on. As such, data associated with the angle of the camera 110 can be used to provide a corrected determined distance between the first point 106 and the second point 110.

In some embodiments, a distance 120 between additional points (e.g., third point 116, fourth point 118) on the map can be calibrated based on the determined distance 114 between the first point 106 and second point 108. In an example, the distance 114 between the first point 106 and the second point 108 can be correlated to a scale and/or number of pixels, which can be applied to additional points on the map. For instance, based on the determined distance 114, the distance 120 between the third point 116 and the fourth point 118 can be determined. Alternatively, and/or in addition, a scale (e.g., ruler) can be displayed on borders of the site 102 when it is presented on a graphical user interface. For example, when the site 102 is displayed on a user interface, a border of the user interface can include a scale configured to allow a user to determine dimensions of the site 102.

In some embodiments, a user can select the third point 116 on the site 102 displayed on the user interface and select the fourth point 118 on the site 102 displayed on the user interface. Upon selection of the points, a distance 120 between the third point 116 and the fourth point 118 can be presented to the user.

Figure 1B illustrates an example of a user interface for site surveying according to one or more embodiments of the present disclosure. In an example, the user interface 122 can be presented on a computing device (e.g., tablet, mobile phone, etc.). The user interface can display directional data 124. In an example, the directional data 124 can be displayed numerically and/or graphically. In an example, the directional data 124 can be associated with a direction that the camera is pointing. The directional data can be used for determining the distance between a number of points (e.g., first point, second point) in the site.

In an example, a map of the site can be correlated with particular directions. For instance, if a row of objects 112 (e.g., columns) are lined up in a direction that faces a particular direction (e.g. northwest, 315 degrees), the directional data 124 can be used to determine whether the camera is facing directly towards the object 112 or if the camera is placed at an angle to the object. If the camera is placed at an angle to the object, a corrected determined distance between the point where the camera is placed and the object 112 can be determined. For instance, the offset in angle between the camera and a position that is normal to the object 112 can be calculated and can be used to determine the corrected determined distance between the point where the camera is placed and the object 112.

In some embodiments, the user interface 122 can include a feature to aid a user in focusing on the second point with the camera. For instance, the feature may include a cross-hair 128 and/or a box 126. The user can align the object 112 with the cross-hair 128 and/or the box 126. In an example, a level 130 can be displayed on the user interface 122 to aid the user in keeping the camera at an appropriate angle (e.g., normal to the object 112). The level 130 can be associated with a side to side movement and/or a front to back movement of the camera.

Some embodiments can include a height that the camera is held from ground level. In an example, a sensor can be in communication with the computing device and/or attached to the camera that can measure a distance between the camera and the ground.

In some embodiments, an icon 134 can be presented to a user for selection on the user interface 122. Upon selection of the icon 134, a determined distance 114 to the object 112 can be presented to the user. In an example, the icon 134 can be presented to the user for selection when the camera is in focus, the camera is indicated as level by the level 130, the camera is held an appropriate distance from ground level (e.g., 132), and/or the camera is facing in the appropriate direction indicated by directional data 124.

Figure 2 illustrates an example diagram for site surveying according to one or more embodiments of the present disclosure. Diagram 240 includes a number of non-top view images and/or elevated images of a site. The number of non-top view images 242 can include a number of objects. For example, the number of non-top view images 242 can include a number of office cubicles. In another example, the number of non-top view images 242 can include nodes (e.g., a sensor of an HVAC system within the site, wireless sensor, etc.).

The non-top view images 242 can include photographic images captured by a camera (e.g., photographic camera, video camera, camera phone, etc.). The number of non-top view images 242 can include images at a front view and/or images at an elevated view.

The front view image can include an image captured parallel to a floor of the site. For example, the front view image can be captured by a camera where the view of the image is parallel to the floor of the site. The elevated view image can include an image that is captured at an elevated position (e.g., position that can capture objects within the area at an angle towards the floor of the area, etc.) with an angle towards the floor of the area. For example, the camera can be at a position above the objects within the area and directed at an angle toward the floor to capture the objects.

The number of non-top view images 242 of a site can include video images (e.g., images captured by a video camera, etc.). The video images can be split into a number of snapshot images (e.g., still frames from the video, etc.) that can be used similar to the non-top view images of the area. The number of snapshot images can each include a corresponding coordinate location (e.g., coordinate location within the area when a corresponding snapshot image was captured, etc.).

The number of non-top view images 242 of the area can include non-top view images captured from a number of different positions and/or directions. For example, the number of non-top view images 242 can include a number of images from a north side of the area, an east side of the area, a south side of the area, and/or a west side of the area. Utilizing non-top view images 242 captured from the number of different positions and/or directions, a top view site map can be generated with an increased number of objects within the area compared to utilizing non-top view images from a single direction.

For example, the non-top view images 242 captured from a single direction can lack a particular number of objects within the area due to other objects blocking the view of the particular number of objects. That is, increasing the number of non-top view images 242 can increase the accuracy of the top view site map. In addition, increasing the number of non-top view images 242 with different directions, angles, and/or height can increase the accuracy of the top view site map.

In some embodiments, a top view site map 246 can be generated utilizing the number of non-top view images 242. Generating the top view site map 246 can include calculating a distance and/or a coordinate position for a number of objects within the number of non-top view images 242. For example, a distance between the camera capturing the non-top view image and the object can be calculated using a number of measurements (e.g., focal data, compass direction of the camera, height of the camera, camera location, etc.).

A distance between a first object and a second object can also be calculated (e.g., number of points 248-1, 248-2). For example, the number of measurements and the distance between the camera and the number of objects can be used to calculate a distance between a first object and a second object within the area. A specialized camera (e.g., stereo camera, etc.) can also be used to determine a distance between the first object and the second object.

The distances between each of the number of objects within an area and the camera can be calculated based on the number of measurements. The number of measurements can include a camera angle. The camera angle can be an angle between the view of the camera and the floor of the area. For example, the camera angle can be zero degrees when the camera view is directed to the floor of the area. In another example, the camera angle can be ninety degrees when the camera view is a front view and/or directed in a parallel direction with the floor of the area.

The number of measurements can also include a compass direction of the camera. The compass direction of the camera can be a direction of the camera view. For example, the camera view can be directed to a north direction. In this example, the compass direction of the camera can be north.

The number of measurements can also include a camera height. The camera height can be a distance between the camera and ground level of the site (e.g., floor of the site) when the camera captures a non-top view image. For example, if a user of the camera captures a front view image of an area, the distance from the camera lens to the floor can be five feet.

The number of measurements can also include a camera location. The camera location can be a coordinate location of the camera when the camera captures a non-top view image. The coordinate location of the camera can be included with a corresponding non-top view image. For example, a coordinate location of a camera can be input into data relating to a particular non-top view image that was captured by the camera at the coordinate location.

The number of non-top view images 242 can be input at 244 into a computing device to determine a coordinate position for each of the number of objects within the site. The coordinate position can be determined based on a corresponding location of a camera that captured each of the number of non-top view images 242.

In an example, a number of points 248-1, 248-2 on the number of non-top view images 242 of the site can be identified. In an example, the number of points can be identified automatically. For instance, the number of points 248-1, 248-2 can be corners formed by an intersection of edges and can be identified on the number of non-top view images 242 by the computing device.

Alternatively, and/or in addition, the number of points 248-1, 248-2 on the number of non-top view images 242 of the site can be identified manually. In an example, the user can select the number of points 248-1, 248-2 manually. For instance, the user can select the number of points 248-1, 248-2 via a user interface associated with the computing device.

In some examples, the number of points can be selected automatically and/or manually prior to capturing the non-top view images 242 with the camera. For instance, as the camera focuses on the site, the number of points 248-1, 248-2 can be identified automatically based on the intersection of edges and can be identified by the computing device.

Alternatively, and/or in addition, a field of view associated with the camera can be displayed on the user interface associated with the camera and the points can be selected manually by the user. Upon selection of the points automatically and/or manually prior to the non-top view images 242 being taken, the camera can focus on the points and focal data associated with the camera can be obtained and used to determine the distance between the points.

Alternatively, and/or in addition, the number of points 248-1, 248-2 can be selected automatical and/or manually after capturing the non-top view images 242 with the camera. In an example, the number of points 248-1, 248-2 can be identified automatical based on the intersection of edges on the non-top view images 242.

Alternatively, and/or in addition, the points can be identified manually by the user. For example, the non-top-view images 242 can be displayed on a user interface of the computing device and the user can select the number of points 248-1, 248-2 manually. Upon selection of the number of points 248-1, 248-2 automatically and/or manually after the non-top view images 242 have been captured, the focal data associated with the camera used to capture the image of each of the number of points 248-1, 248-2 can be analyzed and the distance between the point 248-1 and the point 248-2 can be determined.

The number of non-top view images 242 can be output to generate a top view site map 246 utilizing the non-top view images 242. The top view site map 246 can include the number of objects captured within the number of non-top view images 242. For example, the number of non-top view images 242 can include a number of office cubicles that can be displayed from a top view in the top view site map 246. In some examples, the office cubicles can be displayed as a top view to display an orientation of the office cubicles.

The top view site map 246 can be generated in a desired format (e.g., two dimensional (2D) image file, two dimensional 2D CAD file, three dimensional (3D) image file, 3D CAD file, etc.). For example, the top view site map 246 can be generated in a 3D CAD file format to enable a user to perform a number of functions within a computing application.

In some embodiments, a length of the top view site map for the site can be calibrated based on the determined distance between the number of points 248-1, 248-2, as discussed herein. In an example, the distance between the point 248-1 and the point 248-2 can be correlated to a scale and/or number of pixels, which can be applied to additional points on the map. Alternatively, and/or in addition, a scale (e.g., ruler) can be displayed on boarders of the site when it is presented on a graphical user interface. For example, when the site is displayed on a user interface, a boarder of the user interface can include a scale configured to allow a user to determine dimensions of the site.

In some embodiments, a user can select the third point on the site displayed on the user interface and select the fourth point on the site displayed on the user interface. Upon selection of the points, a distance between the third point and the fourth point can be presented to the user.

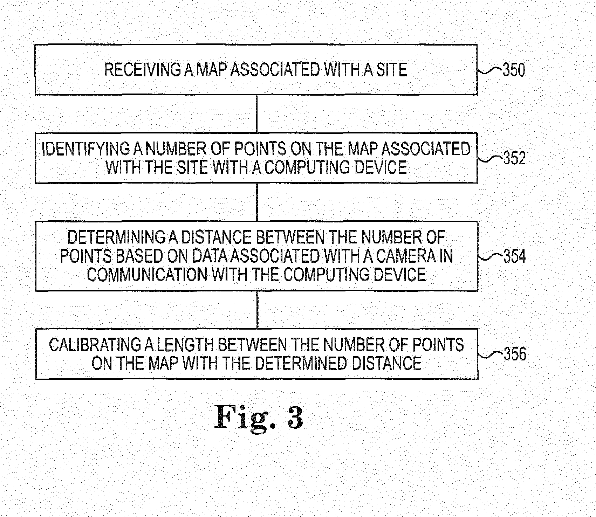

Figure 3 illustrates a method for site surveying according to one or more embodiments of the present disclosure. In some embodiments, the method can include receiving a map associated with a site, at block 350. The site can be a room of a building, area of a compound, floor of a building, area, etc. A map associated with the site may be desired for performing a particular task in the site. In some embodiments, the map associated with the site can be received as a digital file. For instance, a map of the site may exist as a digital representation of a blueprint. In an example, the digital file may not include dimensions associated with the site.

The method can include identifying a number of points on the map associated with the site with a computing device, at block 352. A distance between the number of points can be determined based on data associated with a camera in communication with the computing device, at block 354. In an example, the number of points can include a first point and a second point and the distance between the first point and the second point can be determined based on data associated with the camera in communication with the computing device. For instance, the method can include placing the camera at the first point, focusing on the second point with the camera, and collecting data associated with the camera while focusing on the second point.

In some embodiments, as discussed herein, determining the distance between the number of points with the camera can include determining the distance between the first point and the second point based on the data associated with the camera while focusing on the second point. The data associated with the camera can include at least one of focal data associated with the camera, an angle of the camera, a location of the camera, a height of the camera above ground level, and directional data associated with the camera (e.g., associated with a compass).

The method can include, at block 356, calibrating a length between the number of points on the map with the determined distance. In an example, a remaining portion of the map can be calibrated based on the calibrated length between the number of points on the map. For instance, the distance between the first point 106 and the second point 108 can be correlated to a scale and/or number of pixels, which can be applied to additional points on the map.

In some embodiments, receiving the map associated with the site can include receiving the map associated with the site that is generated by the computing device. In an example, as discussed herein, a number of non-top view images of the site can be received by the computing device and the top view site map for the site can be generated utilizing the number of non-top view images.

In some embodiments, when the map is generated utilizing the number of non-top view images, the number of points on the map associated with the site can be identified on the number of non-top view images of the site. For instance, the number of points can be identified automatically and/or the number of points can be identified manually via a selection made by the user on the user interface of the computing device, as discussed herein.

In some embodiments, generating the top view site map for the area utilizing the number of non-top view images can include calibrating the length between the number of points on the number of non-top view images of the site. For instance, once the distance between the number of points is determined, the distance can be correlated to the number of points on the number of non-top view images of the site.

Figure 4 illustrates a computing device for site surveying according to one or more embodiments of the present disclosure. Computing device 458 can be used to perform the method as discussed in relation to Figure 3. As shown in Figure 4, computing device 458 includes a user interface 422. User interface 422 can be a graphic user interface (GUI) that can provide (e.g., display and/or present) and/or receive information (e.g., data and/or images) to and/or from a user (e.g., operator) of computing device 458. For example, user interface 422 can include a screen that can provide information to a user of computing device 458 and/or receive information entered into a display on the screen by the user. However, embodiments of the present disclosure are not limited to a particular type of user interface 422.

As shown in Figure 4, computing device 458 includes a processor 462 and a memory 464 coupled to the processor 462. Memory 464 can be any type of storage medium that can be accessed by the processor 462 to perform various examples of the present disclosure. For example, memory 464 can be a non-transitory computer readable medium having computer readable instructions (e.g., computer program instructions) stored thereon that are executable by the processor 462 to perform site surveying according to one or more embodiments of the present disclosure.

Memory 464 can be volatile or nonvolatile memory. Memory 464 can also be removable (e.g., portable) memory, or non-removable (e.g., internal) memory. For example, memory 464 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although memory 464 is illustrated as being located in computing device 458, embodiments of the present disclosure are not so limited. For example, memory 464 can also be located internal to another computing resource (e.g., enabling computer readable instructions to be downloaded over the Internet or another wired or wireless connection).

Processor 462 can execute the executable instructions stored in memory 464 in accordance with one or more embodiments of the present disclosure. For example, processor 462 can execute the executable instructions stored in memory 464 to receive a number of non-top view images of a site. The non-top view images can include photographic images captured by a camera (e.g., photographic camera, video camera, camera phone, etc.). The number of non-top view images can include images at a front view and/or images at an elevated view. In an example, the non-top view images can include a number of objects in the site.

Processor 462 can execute the executable instructions stored in memory 464 to identify a number of points on the number of non-top view images of the site. As discussed herein, a selection can be received from the user that identifies the number of points on the non-top view images. Alternatively, and/or in addition, the number of points on the non-top view images can be automatically identified.

Processor 462 can execute the executable instructions stored in memory 464 to determine a distance between the number of points based on data associated with a camera in communication with the computing device. As discussed herein, upon selection of the points, automatically and/or manually, prior to the non-top view images being taken, the camera can focus on the points and focal data associated with the camera can be obtained and used to determine the distance between the points. Alternatively, and/or in addition, upon selection of the number of points, automatically and/or manually, after the non-top view images have been captured, the focal data associated with the camera used to capture the image of each of the number of points can be analyzed and the distance between the number of points can be determined.

Processor 462 can execute the executable instructions stored in memory 464 to generate a top view site map for the site utilizing the number of non-to view images. The top view site map can be generated in a desired format (e.g., two dimensional (2D) image file, two dimensional 2D CAD file, three dimensional (3D) image file, 3D CAD file, etc.). For example, the top view site map 246 can be generated in a 3D CAD file format to enable a user to perform a number of functions within a computing application.

Processor 462 can execute the executable instructions stored in memory 464 to calibrate a length of the top view site map for the site based on the determined distance between the number of points. In an example, the length of the top view site map can be the length between the number of points. Alternatively, and/or in addition, a length of features included in the top view site map that are different than a feature including the number of points can be calibrated based on the determined distance between the number of points. For instance, a length of a wall, door, cubicle, etc. can be calculated based on the length of a column, and/or a distance between a first point located on a side of the column and a second point where the camera is placed.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

## Claims

1. A method for site surveying, comprising:
receiving a map associated with a site (350);
identifying a number of points on the map associated with the site with a computing device (352);
determining a distance between the number of points based on data associated with a camera in communication with the computing device (354); and
calibrating a length between the number of points on the map with the determined distance (356).

2. The method of claim 1, wherein the method includes:
placing the camera (110) at a first point (106);
focusing on a second point (108) with the camera (110); and
collecting the data associated with the camera (110) while focusing on the second point (108).

3. The method of claim 2, wherein determining the distance between the number of points (248-1, 248-2) with the camera (110) includes determining the distance between the number of points (248-1, 248-2) based on the data associated with the camera (110) while focusing on the second point (108).

4. The method of claim 3, wherein the data associated with the camera (110) includes at least one of focal data associated with the camera, an angle of the camera, a location of the camera, a height of the camera above ground level, and directional data associated with the camera.

5. The method of claim 1, wherein the method includes calibrating a remaining portion of the map (246) based on the calibrated length between the number of points on the map (246).

6. The method of claim 1, wherein receiving a map (246) associated with the site includes receiving a map (246) associated with the site that is generated by the computing device (458).

7. The method of 6, wherein the map (246) associated with the site that is generated by the computing device (458) is generated by:
receiving a number of non-top view images of the site; and
generating a top view site map for the site utilizing the number of non-top view images.

8. The method of claim 7, wherein identifying the number of points (248-1, 248-2) on the map (246) associated with the site with the computing device (458) includes identifying the number of points on the number of non-top view images of the site.

9. The method of claim 8, wherein the method includes identifying the number of points (248-1, 248-2) on the number of non-top view images automatically.

10. The method of claim 8, wherein the method includes identifying the number of points (248-1, 248-2) on the number of non-top view images manually via a selection made by a user on a user interface of the computing device (458).
